# EUROPÄISCHE PATENTSCHRIFT

(11) **EP 2 801 928 B1**
(45) Veröffentlichungstag und Bekanntmachung des Hinweises auf die Patenterteilung: **23.10.2019**
(21) Anmeldenummer: 14167280.8
(22) Anmeldetag: 07.05.2014
(51) Int. Cl.: A47J 36/32, H04L 9/32, G06F 21/78, G06F 21/10

(54) **Verfahren zum kopiergeschützten Hinterlegen von Informationen auf einem Datenträger**
Method for the copy-protected storage of information on a data carrier
Procédé de mémorisation protégée contre la copie d'informations sur un support de données

(30) Priorität: 08.05.2013 DE 102013104735
(43) Veröffentlichungstag der Anmeldung: 12.11.2014
(73) Patentinhaber: Vorwerk & Co. Interholding GmbH, 42275 Wuppertal (DE)
(72) Erfinder: Greive, Volker, 42277 Wuppertal (DE)
(74) Vertreter: Müller, Enno

(56) Entgegenhaltungen:
- US-A1- 2006 064 488
- US-A1- 2013 074 047

## Beschreibung

Die Erfindung betrifft ein Verfahren zum Hinterlegen einer aus digitalen Daten bestehenden Information auf einem Datenträger und Auslesen der Information von dem Datenträger, wobei der Datenträger eine individuelle digitale Kennung aufweist, wobei eine die individuelle Kennung umfassende Signatur gebildet wird, wobei die Information zumindest Informationsbestandteile besitzt, die nur dann von einer ersten elektronischen Datenverarbeitungseinrichtung verarbeitet werden können, wenn die individuelle digitale Kennung und die Signatur in einer vorbestimmten Relation zueinander stehen.

Ein Verfahren der vorbezeichneten Art wird in der DE 102009018941 A1 beschrieben. Zur Zugriffskontrolle auf ein verschlüsseltes Dateisystem eines Speichermediums soll dort eine individuelle Kennung des Speicherelementes verwendet werden. Jedes hergestellte Speicherelement hat eine dem Speicherelement individuell zugeordnete und deshalb nur einmal vergebene Seriennummer. Beim Stand der Technik wird aus dieser Seriennummer und einer Referenz auf einem Schlüssel einer Schlüsselgruppe ein Teilschlüssel gebildet. Der Zugriff auf das Dateisystem mittels einer Secure Media Access-Station soll nur dann erlaubt sein, wenn die Kennung eine korrekte Relation zum Schlüssel besitzt. Eine Kopie des Schlüssels auf ein anderes Speichermedium hat somit zur Folge, dass der Zugriff verweigert wird. Der Teilschlüssel oder eine daraus mittels einer Hash-Funktion gewonnenen Kennung soll mit einem persönlichen Schlüssel, beispielsweise basierend auf einem asymmetrischen Krypto-System, beispielsweise basierend auf RSA-2048 signiert werden.

Die US 2006/0064488 A1 beschreibt ein Verfahren für den Software-Vertrieb und ein dabei verwendetes System zum Handhaben digitaler Rechte. Die EP 2573632 A1 beschreibt ein Haushaltsgerät wozu ein Haushaltsgerätprogramm übertragen werden kann. Das Programm ist mit einer Kennung ausgestattet.

Aus der DE 102007059236 A1 sind elektromotorische Haushaltsgeräte, insbesondere Küchenmaschinen, bekannt. Zum Stand der Technik gehörende elektromotorisch betreibbare Haushaltsgeräte sind in der Lage, nach einem in einem Programmspeicher abgelegten Programm zu arbeiten, wobei das Programm zeitlich aufeinander abfolgende Programmschritte beinhaltet und sich die Programmschritte durch verschiedenartige Verfahrensparameter, wie Bearbeitungstemperatur oder Drehzahl eines Rührwerks oder Dauer eines Prozessschrittes unterscheiden. Die zugehörigen Prozesssteuerdaten werden in einer Speichereinrichtung einer integrierten Halbleiterschaltung gespeichert.

Der Erfindung liegt die Aufgabe zugrunde, Maßnahmen anzugeben, mit denen ein elektromotorisches Haushaltsgerät mit Prozesssteuerdaten und/oder mit einer Mensch-Maschinenschnittstelle wiedergebbaren Daten versorgt werden kann, wobei gleichzeitig sichergestellt werden soll, dass nur Originaldaten zur Anwendung kommen.

Gelöst wird die Aufgabe durch die in den Ansprüchen angegebene Erfindung.

Mit dem erfindungsgemäßen Verfahren werden aus digitalen Daten bestehende Informationen auf einem Datenträger bereitgestellt. Diese digitalen Informationen sind unter Verwendung der individuellen, signierten Kennung auf Authentizität überprüfbar. Sie werden von der elektronischen Datenverarbeitungseinrichtung nur dann verarbeitet, d.h. gelesen und erkannt, wenn die individuelle digitale Kennung, bei der es sich um eine einzigartige Seriennummer handeln kann, und die bei der Herstellung des Datenträgers beziehungsweise bei der Abspeicherung der digitalen Daten auf dem Datenträger erzeugten Signatur in einer vorbestimmten Relation zueinander bestehen. Die Relation kann als Chiffrierung ausgebildet sein. Es kann sich um eine Prüfsummenbeziehung der individuellen Kennung des Datenträgers und der Signatur handeln. Die digitale Signatur kann in bekannter Weise unter Verwendung einer Hash-Funktion erzeugt werden, wobei zuvor die individuelle digitale Kennung, also die Seriennummer des Datenträgers, insbesondere eines USB-Sticks, in die die Information tragende Datei geschrieben wird oder in eine gesonderte, aber zum selben Dateisystem gehörende Datei geschrieben wird. Diese, in bekannter Weise mit einem privaten Schlüssel signierte Datei wird dann auf dem Datenträger gespeichert. In Betracht kommen hier beispielsweise die eingangs genannten asymmetrischen Krypto-Systeme. Die im elektromotorischen Haushaltsgerät angeordnete elektronische Datenverarbeitungseinrichtung ist derart programmiert, dass sie den Datenträger beziehungsweise die darauf gespeicherten Informationen nur dann akzeptiert, wenn sich die Signatur verifizieren lässt. Wird ein aus einem privaten und einem öffentlichen Schlüssel bestehendes Krypto-System verwendet, so lässt sich die Signatur mit Hilfe des öffentlichen Schlüssels verifizieren. In dieser bevorzugten Variante wird die Relation durch Verwendung des öffentlichen Schlüssels und der Vergleich der in der Datei gespeicherten Seriennummer mit der tatsächlichen Seriennummer des Datenträgers hergestellt. Dabei wird bei erfolgreicher Verifikation die in der Datei gespeicherte individuelle digitale Kennung, also insbesondere die Seriennummer mit der Seriennummer des Datenträgers selbst verglichen und geprüft, ob die beiden Nummern identisch sind Stimmen die Seriennummern nicht überein beziehungsweise lässt sich die Signatur als Folge einer Manipulation an der auf dem Datenträger gespeicherten Information nicht verifizieren, wird die Verarbeitung der auf dem digitalen Datenträger abgelegten Information verweigert. Erfindungsgemäß erfolgt bei der Signatur aber keine derartige Verschlüsselung, dass die Information nur unter Verwendung eines passenden Schlüssels gelesen werden kann. Erfindungsgemäß ist vielmehr vorgesehen, dass die Information zumindest Informationsbestandteile besitzt, die von einer zweiten elektronischen Datenverarbeitungseinrichtung, also beispielsweise einem handelsüblichen PC oder einem anderen Datensichtgerät verarbeitet, d.h. gelesen und ausgewertet, insbesondere auf einer Mensch-Maschinenschnittstelle wiedergegeben werden können, auch wenn die Signatur und die Kennung nicht in der vorbeschriebenen Relation zueinander stehen, also eine Verifikation fehlschlägt beziehungsweise die in der Datei gespeicherte Seriennummer nicht mit der Seriennummer des Datenträgers übereinstimmt. Die auf dem Datenträger gespeicherten Informationen können qualitativ voneinander verschiedene Informationsbestandteile aufweisen. So können die Informationen Informationsbestandteile in Form von Textdateien, Audiodateien, Videodateien oder Bilddateien aufweisen. Diese von einem Benutzer sinnlich erfassbaren Daten können über verschiedene Mensch-Maschinen-Schnittstellen abgegeben werden; beispielsweise können Textdateien und Bilddateien auf einem Bildschirm eines PCs dargestellt werden. Die diesbezüglichen Dateien können im PDF-Format, im RTF-Format, im HTML-Format, im XML-Format, im Format SQLite oder in einem anderen Format, insbesondere unter Verwendung des "mark-up-language-Konzeptes" abgespeichert sein, wobei die Seriennummer in nicht darstellbaren Bestandteilen der Dateien abgespeichert sein kann. Die Seriennummer kann aber auch in einer gesonderten, ebenfalls auf dem Datenträger abgespeicherten Datei abgespeichert werden. Zumindest diese Datei wird signiert. Des Weiteren können die Informationen Maschinensteuerdaten enthalten. Die Maschinensteuerdaten sind bevorzugt Prozesssteuerdaten, die in einem geeigneten Protokoll Prozessparameter beinhalten, wobei die Prozessparameter u.a. die Dauer eines Prozesses, die Temperatur eines Prozessschrittes und/oder die Drehzahl eines Rührwerks sein können. Diese Prozesssteuerdaten können auch verschlüsselt auf dem Datenträger abgespeichert sein, so dass sie nicht von einer zweiten elektronischen Datenverarbeitungseinrichtung verarbeitbar sind.

Die Erfindung betrifft darüber hinaus ein System zur Durchführung des Verfahrens, bestehend aus einem Datenträger, auf dem eine aus digitalen Daten bestehende Information gespeichert ist, wobei der Datenträger eine individuelle digitale Kennung aufweist, die ebenso wie die Information auf dem Datenträger gespeichert ist, wobei die individuelle Kennung jedoch signiert ist. Das System weist darüber hinaus eine elektronische Datenverarbeitungseinrichtung auf, die so programmiert ist, dass sie die Verarbeitung der auf dem Datenträger hinterlegten digitalen Daten verweigert, wenn die individuelle digitale Kennung und die Signatur nicht in einer vorbestimmten Relation zueinander stehen, also wenn entweder eine Signatur nicht verifizierbar ist oder die auf dem Datenträger abgespeicherte digitale Kennung nicht mit der tatsächlichen digitalen Kennung des Datenspeichers übereinstimmen. Erfindungsgemäß ist die elektronische Datenverarbeitungseinrichtung Bestandteil eines elektromotorisch betreibbaren Haushaltsgerätes, insbesondere eines Küchengerätes und besonders bevorzugt Teil einer Vorrichtung zur Zubereitung von Speisen nach einer vorbestimmten Rezeptur, wobei die Rezeptur auf dem Datenträger als Information abgespeichert ist.

Die Erfindung betrifft darüber hinaus ein elektromotorisch betreibbares Haushaltsgerät, insbesondere eine Küchenmaschine, die eine elektronische Datenverarbeitungseinrichtung aufweist, die derart programmiert ist, dass sie in der Lage ist, Daten von einem über eine Schnittstelle mit der elektronischen Datenverarbeitungseinrichtung in Verbindung bringbaren Datenträger lesen kann, wobei die elektronische Datenverarbeitungseinrichtung derart programmiert ist, dass sie die Signatur der auf dem digitalen Datenträger hinterlegten digitalen Daten verifiziert und bei erfolgreicher Verifikation einen auf dem Datenträger abgespeicherten, von der Signatur mitumfassten Wert für eine individuelle digitale Kennung mit der tatsächlichen digitalen Kennung des Datenträgers vergleicht. Das Haushaltsgerät ist ferner so eingerichtet, dass es die Verarbeitung der Informationen verweigert, wenn entweder die Verifikation der Signatur fehlschlägt oder die gespeicherte individuelle digitale Kennung nicht mit der tatsächlichen individuellen digitalen Kennung des Datenträgers übereinstimmt. Das erfindungsgemäße Haushaltsgerät ist bevorzugt ferner in der Lage, einen aus mehreren hintereinander abfolgenden Schritten bestehenden Bearbeitungsprozess, insbesondere einen Speisezubereitungsprozess, durchzuführen, wobei die Prozessdaten auf dem digitalen Datenträger gespeicherte Prozesssteuerdaten sind.

Die Erfindung betrifft darüber hinaus eine integrierte Schaltung, insbesondere in Form eines Speichermediums mit einem integrierten Speicher und einem integrierten Controller, wobei auf dem integrierten Speicher digitale Daten abgespeichert sind und das Speichermedium eine individuelle digitale Kennung aufweist. Wesentlich ist, dass die auf dem Speichermedium abgespeicherte Information eine Verfahrensrezeptur ist, die auf einer Mensch-Maschinenschnittstelle, beispielsweise einem Bildschirm in Text- und/oder in Bildform darstellbar ist und/oder von einem Haushaltsgerät ausführbare Prozesssteuerdaten umfasst. Im integrierten Speicher ist in Form digitaler Daten eine Signatur abgelegt, die von einer elektronischen Datenverarbeitungseinrichtung der vorbezeichneten Art verifizierbar ist.

Ein Ausführungsbeispiel wird nachfolgend anhand der beigefügten Zeichnung erläutert.

Die Zeichnung zeigt in Form eines Blockschaltbildes den Ablauf eines Verfahrens zum Hinterlegen einer aus digitalen Daten bestehenden Information und Auslesen dieser Information sowie ein nach diesem Verfahren arbeitendes System.

An der Stelle E der Figur ist eine elektrisch betriebene Küchenmaschine dargestellt, wie sie von der DE 102007059236 A1 beschrieben ist. Der Inhalt der DE 102007059236 A1 wird zitiert zu dem Zweck, Merkmale in Ansprüche vorliegender Erfindung mit einzubeziehen.

Die Bezugsziffer 11 charakterisiert eine in der elektronischen Küchenmaschine integrierte elektronische Datenverarbeitungseinrichtung. Diese erste elektronische Datenverarbeitungseinrichtung 11 kann von einem Mikrocontroller ausgebildet sein. Die Küchenmaschine besitzt eine nicht dargestellte Schnittstelle, mit der ein externes Speichermedium mit der elektronischen Datenverarbeitungseinrichtung 11 in Wirkverbindung gebracht werden kann.

Mit der Bezugsziffer 1 ist ein handelsüblicher USB-Stick bezeichnet, der eine universelle serielle Schnittstelle besitzt, mit der der USB-Stick 1 in eine Datenübertragungsverbindung zu der elektronischen Datenverarbeitungseinrichtung 11 der Küchenmaschine beziehungsweise einer zweiten elektronischen Datenverarbeitungseinrichtung 12 in Form eines handelsüblichen PCs gebracht werden kann.

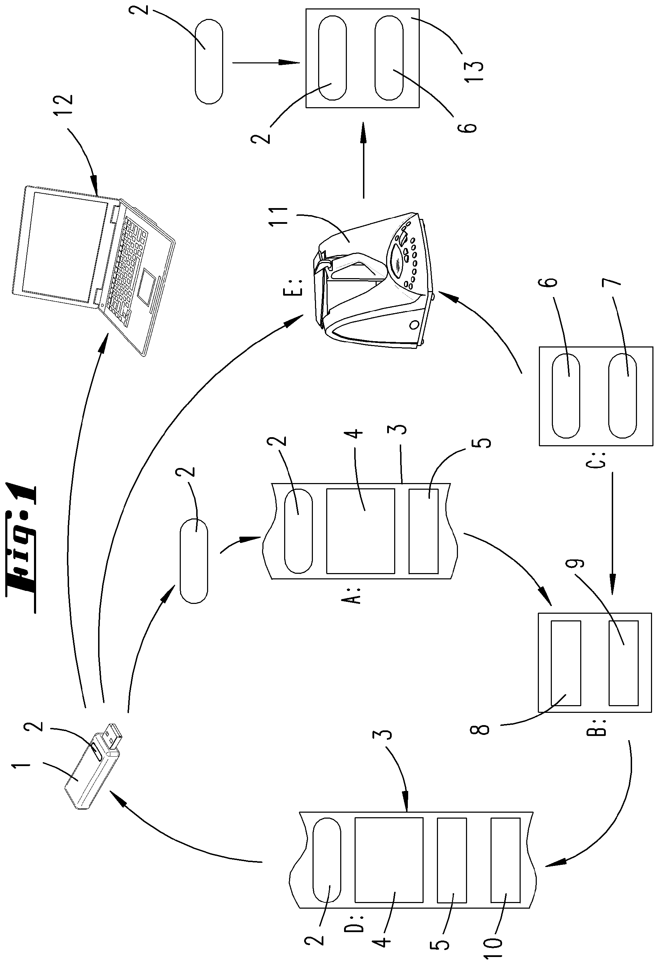

Der digitale Datenträger 1 besitzt ein Speichermedium mit einem integrierten Speicher und einem integrierten Controller. Darin ist eine individuelle Kennung 2 in Form einer universell, d.h. einzigartigen Seriennummer abgelegt. Diese Seriennummer wird in der Figur 1 symbolisch mit der Bezugsziffer 2 gekennzeichnet.

Die Bezugsziffer 3 bezeichnet eine Datei, die digitale Informationen 4 und 5 aufweist. Bei den digitalen Informationen 4 kann es sich um auf einem Datensichtgerät eines PCs 12 darstellbare Informationen, beispielsweise Texte oder Bilder, aber auch um Audio- oder Videodateien handeln. Derartige Dateien, beispielsweise PDF-, RTF-, HTML-, XML-, SQLite-Dateien beinhalten nicht nur die reinen Informationen, sondern ergänzende Informationen, die dort als zusätzliche Tags oder Metadaten abgespeichert sind. Ebenfalls als nicht sichtbare beziehungsweise nicht sinnlich erfassbare Information wird in derselben Datei 3 oder in einer zum selben Dateiensystem gehörenden Datai ein die Seriennummer 2 des Datenträgers 1 entsprechender Wert abgespeichert. Darüber hinaus kann die Datei 3, die auch aus einem Ensemble mehrerer Dateien bestehen kann, Maschinensteuerungsdaten 5 tragen, bei denen es sich um Prozesssteuerdaten handelt, mit denen die elektronische Datenverarbeitungseinrichtung 11 der Küchenmaschine dort ein Speisezubereitungsprogramm ablaufen lassen kann, wobei die Prozesssteuerdaten 5 zumindest die Dauer eines einzelnen Bearbeitungsschritts, die Temperatur des Bearbeitungsschritts und eine Rührwerksdrehzahl beinhalten.

An der mit A bezeichneten Stelle des Ablaufdiagramms wird somit eine Datei oder ein Ensemble mehrerer Dateien 3 erstellt, welches die individuelle Kennung 2, eine Verfahrensrezeptur 4 im Klartext und optimal zugeordnete Maschinensteuerungsdaten 5 beinhaltet.

An der mit B bezeichneten Stelle wird mit einer HASH-Funktion 8 eine vielstellige Prüfziffer erstellt, die die Individualität der Datei beziehungsweise des Ensembles mehrerer Dateien 3 kennzeichnet. Der HASH-Wert kann beispielsweise unter Verwendung des Message Digest Algorythm 2 (MD 2) oder aber auch ähnlicher Algorithmen, beispielsweise MD 4, MD 5 oder SHA 256 etc. erzeugt werden. Bevorzugt wird der Algorithmus SHA 256 verwendet, da er als bester Kompromiss aus Sicherheit und Verarbeitungsgeschwindigkeit angesehen wird.

An der Stelle C des Ablaufplanes ist ein asymmetrisches Schlüsselpaar dargestellt, welches einen öffentlichen Schlüssel 6 und einen privaten Schlüssel 7 beinhaltet. Die beiden Schlüssel 6, 7 haben die Eigenschaft, dass mit einem öffentlichen Schlüssel 6 verschlüsselte Dateien nur mit dem zugehörigen privaten Schlüssel 7 entschlüsselbar sind beziehungsweise - und davon wird erfindungsgemäß Gebrauch gemacht - Dateien mit dem privaten Schlüssel zu signieren, wobei die Signatur nur unter Verwendung des öffentlichen Schlüssels 6 verifizierbar ist. Das diesbezügliche Schlüsselpaar kann in bekannter Weise nach dem RSA-Algorithmus mit ausreichender Bitzahl erzeugt werden.

Unter Verwendung des privaten Schlüssels 7 wird der an der Stelle B erzeugte HASH-Wert 8 signiert. Die dabei entstandene Signatur 9 beinhaltet zumindest den Wert der individuellen Seriennummer 2. Beim Ausführungsbeispiel erstreckt sich die Signatur 9 aber auf die gesamte Datei 3, die die Information 4, 5 und die individuelle digitale Kennung 2 umfasst.

Die Stelle D symbolisiert, dass die digitale Signatur 9 als Zertifikat 10 in der Datei 3 oder dem Ensemble aus mehreren Dateien 3 hinzugefügt ist.

Diese Datei 3 beziehungsweise das Dateiensystem 3 wird nun auf den digitalen Datenträger 1 gespeichert, von dem die individuelle digitale Kennung 2 entnommen worden ist.

Soll die Information 4, 5 auch auf einem, insbesondere mehreren anderen Datenträgern gespeichert werden, so müssen diesbezügliche individuelle Signaturen 9 erzeugt werden, die zusammen mit den Informationen 4, 5 auf dem jeweiligen Datenträger 1 abgespeichert werden.

Werden die auf dem Datenträger 1 abgespeicherten Informationen 4, 5 verändert, so kann von der ersten elektronischen Datenverarbeitungseinrichtung 11 die Signatur 9 beziehungsweise das Zertifikat 10 nicht verifiziert werden. Die Verifikation erfolgt unter Verwendung des öffentlichen Schlüssels 6, welcher von einem Programm verwendet wird, welches in der ersten elektronischen Datenverarbeitungseinrichtung 11 in der Küchenmaschine implementiert ist. Die Verifizierung 13 erfolgt zunächst durch Überprüfung der Signatur 9 mit Hilfe des öffentlichen Schlüssels 6 und anschließend der Überprüfung der in der Datei 3 abgelegten Seriennummer 2 mit der tatsächlichen Seriennummer 2 des Datenträgers 1. Wurde die Datei 3 oder die zu einem Ensemble von Dateien 3 gehörenden Informationen auf einen anderen Datenträger kopiert, der eine andere Seriennummer 2 besitzt, so wird die Verarbeitung der Informationen 4, 5 von der ersten elektronischen Datenverarbeitungseinrichtung 11 verweigert, weil die Seriennummern 2 nicht übereinstimmend sind. Dasselbe gilt für manipulierte Daten, da dann die Signatur 9 nicht verifiziert werden kann.

Gleichwohl können die sinnlich wahrnehmbaren Informationen 4 aber von einem handelsüblichen PC, der eine zweite elektronische Datenverarbeitungseinrichtung 12 darstellt, verarbeitet, d.h. angezeigt beziehungsweise sinnlich erfassbar gemacht werden.

Auf diese Weise ist es möglich, beispielsweise lesbare Rezepturen zur Zubereitung von Speisen beliebig oft zu kopieren. Die Kopien sind dann von einem beliebigen PC 12 lesbar und darstellbar. Sie können aber nicht zur Zubereitung von Speisen mittels der Küchenmaschine, die die erste elektronische Datenverarbeitungseinrichtung 11 aufweist, verwendet werden.

### Bezugszeichenliste:

- 1: USB-Stick
- 2: Kennung
- 3: Datei
- 4: Information
- 5: Information
- 6: öffentlicher Schlüssel
- 7: privater Schlüssel
- 8: HASH-Wert
- 9: digitale Signatur
- 10: Küchenmaschine
- 11: erste elektronische Datenverarbeitungseinrichtung
- 12: zweite elektronische Datenverarbeitungseinrichtung
- 13: Verifizierung

## Patentansprüche

1. Verfahren zum Hinterlegen einer aus digitalen Daten bestehenden Information (4, 5) auf einem Datenträger (1) und Auslesen der Information von dem Datenträger (1),
wobei der Datenträger (1) eine individuelle digitale Kennung (2) aufweist, wobei beim Hinterlegen, eine aus der individuellen Kennung (2) erzeugte Signatur (10) abgelegt wird,
wobei die Information Maschinensteuerdaten (5) besitzt,
wobei beim Auslesen durch eine erste elektronische Datenverarbeitungseinrichtung (11), die Signatur (10) überprüft wird, und die Maschinensteuerdaten (5) nur dann von einer ersten elektronischen Datenverarbeitungseinrichtung (11) verarbeitet werden können, wenn die individuelle digitale Kennung (2) und die Signatur (10) in einer vorbestimmten Relation zueinander stehen,
wobei die erste elektronische Datenverarbeitungseinrichtung (11) Teil einer elektromotorisch betreibbaren Küchenmaschine zur Speisezubereitung ist,
wobei die Maschinensteuerdaten (5) Verfahrensparameter wie Temperatur, Rührwerkdrehzahl sowie Zeiten nacheinander folgender Bearbeitungsschritte umfassen, und
wobei die Information eine in Text- und/ oder Bildform wiedergebbare Speisezubereitungsrezeptur (4) besitzt, die von einer zweiten elektronischen Datenverarbeitungseinrichtung (12) auch dann von einer Mensch-Maschinenschnittstelle wiedergegeben werden kann, wenn die Signatur (10) und die Kennung (2) nicht in der vorbestimmten Relation zueinander stehen, und die den Maschinensteuerdaten (5) zugeordnet ist.

2. Verfahren nach Anspruch 1, **dadurch gekennzeichnet, dass** zum Erzeugen der Signatur (10) ein asymmetrisches Schlüsselpaar, bestehend aus einem privaten Schlüssel und einem öffentlichen Schlüssel, verwendet wird, wobei die Signatur unter Verwendung des privaten Schlüssels erzeugt wird, und eine Verifikation unter Verwendung des öffentlichen Schlüssels von der ersten elektronischen Datenverarbeitungseinrichtung (11) erfolgt.

3. Verfahren nach Anspruch 2, **dadurch gekennzeichnet, dass** zum Erzeugen der Signatur (10) entweder die um die individuelle Kennung (2) ergänzte Information (4, 5) mit dem privaten Schlüssel verschlüsselt wird oder ein daraus gebildeter HASH-Wert mit dem privaten Schlüssel verschlüsselt wird.

4. Verfahren nach einem der Ansprüche 2 oder 3, **dadurch gekennzeichnet, dass** die Signatur (10) Bestandteil einer die Informationen (4, 5) und die individuelle Kennung (2) aufweisenden, auf dem Datenträger (1) gespeicherte Datei ist oder eine separate, auf dem Datenträger (1) gespeicherte Datei ist.

5. Verfahren nach einem der vorhergehenden Ansprüche, **dadurch gekennzeichnet, dass** die Information (4, 5) als "mark-up-language" Datei insbesondere in einem PDF-, einem SQLite-, einem RTF-, einem HTML-, einem JPG-, einem TIF- oder einem XML-Format auf dem Datenträger (1) abgespeichert ist.

6. Verfahren nach einem der vorhergehenden Ansprüche, **dadurch gekennzeichnet, dass** die individuelle Kennung eine insbesondere nur einmal vergebene Seriennummer (unique serial number) ist.

7. System zur Durchführung insbesondere eines Verfahren gemäß einem oder mehreren der vorhergehenden Ansprüche, umfassend zumindest einen Datenträger (1), auf dem eine aus digitalen Daten bestehende Information (4, 5) abgelegt ist, wobei der Datenträger (1) eine individuelle digitale Kennung (2) aufweist, wobei eine aus der individuellen Kennung (2) erzeugte Signatur auf dem Datenträger (1) gespeichert ist, wobei die Information Maschinensteuerdaten (5) besitzt, und
eine erste elektronische Datenverarbeitungseinrichtung (11), dazu ausgebildet die Signatur (10) zu überprüfen, und die Maschinensteuerdaten (5) nur dann zu verarbeiten, wenn die individuelle digitale Kennung (2) und die Signatur (10) in einer vorbestimmten Relation zueinander stehen,
wobei die erste Datenverarbeitungseinrichtung (11) Teil einer elektromotorisch betreibbaren Küchenmaschine zur Speisezubereitung ist,
wobei die Maschinensteuerdaten (5) Verfahrensparameter wie Temperatur, Rührwerkdrehzahl sowie Zeiten nacheinander folgender Bearbeitungsschritte umfassen, und
wobei die Information eine in Text-und/ oder Bildform wiedergebbare Speisezubereitungsrezeptur besitzt, die von einer zweiten elektronischen Datenverarbeitungseinrichtung (12) auch dann von einer Mensch-Maschinenschnittstelle wiedergegeben werden kann, wenn die Signatur (10) und die Kennung (2) nicht in der vorbestimmten Relation zueinander stehen, und die den Maschinensteuerdaten (5) zugeordnet ist.

8. System nach Anspruch 7, **dadurch gekennzeichnet, dass** der Datenträger ein USB-Stick ist.

9. Integrierte Halbleiterschaltung mit einer Steuerschaltung zur seriellen oder parallelen Kommunikation mit einer ersten oder einer zweiten elektronischen Datenverarbeitungseinrichtung (11,12) und mit einer Speichereinrichtung, welche Halbleiterschaltung eine individuelle digitale Kennung (2) aufweist, und auf welcher Speichereinrichtung eine aus digitalen Daten bestehende Information (4, 5) die Maschinensteuerdaten (5) aufweist sowie eine aus der digitalen Kennung (2) erzeugte Signatur (10) gespeichert ist, wobei die individuelle digitale Kennung (2) und die Signatur (10) in einer vorbestimmten Relation zueinander stehen, wobei die Maschinensteuerdaten (5) Verfahrensparameter wie Temperatur, Rührwerkdrehzahl sowie Zeiten nacheinander abfolgender Bearbeitungsschritte für eine elektrisch betreibbaren Küchenmaschine zur Speisezubereitung umfassen, wobei die Information ferner eine den Maschinensteuerdaten (5) zugeordnete in Text- und/ oder Bildform wiedergebbare Speisezubereitungsrezeptur besitzt.

10. Elektromotorisch betreibbare Küchenmaschine aufweisend eine elektronische Datenverarbeitungseinrichtung (11), die dazu ausgerichtet ist, Information (4, 5) und eine Signatur (10), die gemäß einem der vorhergehenden Verfahrensansprüche auf einem Datenträger (1), der eine individuelle digitale Kennung (2) aufweist, gespeichert ist, auszulesen, die Signatur (10) zu überprüfen, und
Prozesssteuerdaten (5), die Bestandteil dieser Information (4, 5) sind, nur dann zu verarbeiten, wenn die individuelle digitale Kennung (2) und die Signatur (10) in einer vorbestimmten Relation zueinander stehen.

## Claims

1. Method for storing information (4, 5) consisting of digital data on a data carrier (1) and reading out the information from the data carrier (1), wherein the data carrier (1) has an individual digital identifier (2), wherein, when storing, a signature (10) generated from the individual identifier (2) is filed, wherein the information has machine control data (5), wherein, when reading out via a first electronic data processing device (11), the signature (10) is checked and the machine control data (5) can only then be processed by a first electronic data processing device (11) if the individual digital identifier (2) and the signature (10) are in a predetermined relationship to one another, wherein the first electronic data processing device (11) is part of a food processor for food preparation that can be operated by an electric motor, wherein the machine control data (5) comprise process parameters such as temperature, speed of the stirring mechanism and times of successive processing steps, and wherein the information has a food preparation recipe (4) which is associated with the machine control data (5), can be reproduced in textual and/or pictorial form, and can be reproduced by a second electronic data processing device (12) using a human-machine interface even if the signature (10) and the identifier (2) are not in the predetermined relationship to one another.

2. Method according to claim 1, **characterised in that** an asymmetric key pair consisting of a private key and a public key is used to generate the signature (10), the signature being generated using the private key, and a verification being carried out by the first electronic data processing device (11) using the public key.

3. Method according to claim 2, **characterised in that**, in order to generate the signature (10), either the information (4, 5) supplemented by the individual identifier (2) is encrypted using the private key, or a HASH value formed therefrom is encrypted using the private key.

4. Method according to either claim 2 or claim 3, **characterised in that** the signature (10) is a component of a file which is stored on the data carrier (1) and contains the information (4, 5) and the individual identifier (2), or is a separate file which is stored on the data carrier (1).

5. Method according to any of the preceding claims, **characterised in that** the information (4, 5) is stored on the data carrier (1) as a "mark-up-language" file, in particular in a PDF, an SQLite, an RTF, an HTML, a JPG, a TIF or an XML format.

6. Method according to any of the preceding claims, **characterised in that** the individual identifier is a serial number which in particular is assigned only once (unique serial number).

7. System for carrying out in particular a method according to one or more of the preceding claims, comprising at least one data carrier (1) on which information (4, 5) consisting of digital data is stored, wherein the data carrier (1) has an individual digital identifier (2), wherein a signature generated from the individual identifier (2) is stored on the data carrier (1), wherein the information has machine control data (5), and a first electronic data processing device (11) is designed to check the signature (10) and to only then process the machine control data (5) if the individual digital identifier (2) and the signature (10) are in a predetermined relationship to one another, wherein the first data processing device (11) is part of a food processor for food preparation that can be operated by an electric motor, wherein the machine control data (5) comprise process parameters such as temperature, speed of the stirring mechanism and times of successive processing steps, and wherein the information has a food preparation recipe which is associated with the machine control data (5), can be reproduced in textual and/or pictorial form, and can be reproduced by a second electronic data processing device (12) using a human-machine interface even if the signature (10) and the identifier (2) are not in the predetermined relationship to one another.

8. System according to claim 7, **characterised in that** the data carrier is a USB stick.

9. Integrated semiconductor circuit having a control circuit for serial or parallel communication with a first or a second electronic data processing device (11, 12) and having a storage device, which semiconductor circuit has an individual digital identifier (2), and on which storage device information (4, 5) which consists of digital data and has the machine control data (5) is stored and a signature (10) generated from the digital identifier (2) is stored, wherein the individual digital identifier (2) and the signature (10) are in a predetermined relationship to one another, wherein the machine control data (5) comprise process parameters such as temperature, speed of the stirring mechanism and times of successive processing steps for a food processor for food preparation which can be electrically operated, wherein the information additionally comprises a food preparation recipe which is associated with the machine control data (5) and can be reproduced in textual and/or pictorial form.

10. Food processor operable by an electric motor, comprising an electronic data processing device (11) which is designed to read out information (4, 5) and a signature (10) which, according to any of the preceding method claims, is stored on a data carrier (1) which has an individual digital identifier (2), to check the signature (10), and to then process process control data (5) which are a component of this information (4, 5) only if the individual digital identifier (2) and the signature (10) are in a predetermined relationship to one another.

## Revendications

1. Procédé d'enregistrement d'une information (4, 5) constituée de données numériques sur un support de données (1) et de lecture de l'information sur le support de données (1),
dans lequel le support de données (1) comprend un identifiant numérique individuel (2),
dans lequel lors de l'enregistrement, une signature (10) générée à partir de l'identifiant individuel (2) est enregistrée,
dans lequel l'information comprend des données de commande de machine (5),
dans lequel la signature (10) est vérifiée lors de la lecture par un premier dispositif électronique de traitement de données et les données de commande de machine (5) ne peuvent être traitées par un premier dispositif électronique de traitement de données (11) que si l'identifiant numérique individuel (2) et la signature (10) sont dans une relation prédéterminée entre eux,
dans lequel le premier dispositif électronique de traitement de données (11) fait partie d'un appareil de cuisine à moteur électrique pour préparer des aliments,
dans lequel les données de commande de machine (5) comprennent des paramètres de processus tels que la température, la vitesse de rotation de l'agitateur et des durées d'étapes de traitement successives, et
dans lequel l'information comprend une recette de préparation d'aliments (4) restituable sous forme de texte(s) et/ou d'image(s), qui peut être restituée par un deuxième dispositif électronique de traitement de données (12) par une interface homme-machine même si la signature (10) et l'identifiant (2) ne sont pas dans la relation prédéterminée entre eux, et qui est associée aux données de commande de machine (5).

2. Procédé selon la revendication 1, **caractérisé en ce que** sont utilisées pour générer la signature (10) une paire de clés asymétriques constituée d'une clé privée et d'une clé publique, dans lequel la signature est générée en utilisant la clé privée et une vérification est effectuée par le premier dispositif électronique de traitement de données (11) en utilisant la clé publique.

3. Procédé selon la revendication 2, **caractérisé en ce que**, pour générer la signature (10), soit l'information (4, 5) complétée par l'identifiant individuel (2) est cryptée avec la clé privée, soit une valeur de hachage formée à partir de celle-ci est cryptée avec la clé privée.

4. Procédé selon l'une des revendications 2 ou 3, **caractérisé en ce que** la signature (10) fait partie d'un fichier qui contient les informations (4, 5) et l'identifiant individuelle (2) et qui est enregistré sur le support de données (1) ou est un fichier séparé, enregistré sur le support de données (1).

5. Procédé selon l'une des revendications précédentes, **caractérisé en ce que** les informations (4, 5) sont mémorisées sur le support de données (1) sous la forme d'un fichier en « mark-up-language », en particulier dans un format PDF, SQLite, RTF, HTML, JPG, TIF ou XML.

6. Procédé selon l'une des revendications précédentes, **caractérisé en ce que** l'identifiant individuel est un numéro de série qui en particulier est attribué une seule fois (unique serial number).

7. Système pour la mise en oeuvre en particulier d'un procédé selon une ou plusieurs des revendications précédentes, comprenant au moins un support de données (1) sur lequel est enregistré une information (4, 5) constituée de données numériques, dans lequel le support de données (1) présente un identifiant numérique individuel (2), dans lequel une signature produite à partir de l'identifiant individuel (2) est enregistrée sur le support de données (1), dans lequel l'information comprend des données de commande de machine (5), et
un premier dispositif électronique de traitement de données (11) est conçu pour vérifier la signature (10) et pour traiter les données de commande de machine (5) uniquement lorsque l'identifiant numérique individuel (2) et la signature (10) sont dans une relation prédéterminée entre eux,
dans lequel le premier dispositif de traitement de données (11) fait partie d'un appareil de cuisine à moteur électrique pour préparer des aliments, dans lequel les données de commande de machine (5) comprennent des paramètres de processus tels que la température, la vitesse de rotation de l'agitateur et des durées d'étapes de traitement successives, et
dans lequel l'information comprend une recette de préparation d'aliments restituable sous forme de texte(s) et/ou d'image(s), qui peut être restituée par un deuxième dispositif électronique de traitement de données (12) par une interface homme-machine même si la signature (10) et l'identifiant (2) ne sont pas dans la relation prédéterminée entre eux, et qui est associée aux données de commande de machine (5).

8. Système selon la revendication 7, **caractérisé en ce que** le support de données est une clé USB.

9. Circuit intégré à semi-conducteurs, comprenant un circuit de commande pour communication sérielle ou parallèle avec un premier ou un deuxième dispositif électronique de traitement de données (11, 12) et comprenant un dispositif de mémoire, lequel circuit à semi-conducteurs comporte un identifiant numérique individuel (2), et dans lequel dispositif de mémoire est enregistrée une information (4, 5) constituée de données numériques comprenant des données de commande de machine (5) et une signature (10) générée à partir de l'identifiant numérique (2), dans lequel l'identifiant numérique individuel (2) et la signature (10) sont dans une relation prédéterminée entre eux, dans lequel les données de commande de machine (5) comprennent des paramètres de processus tels que la température, la vitesse de rotation de l'agitateur et des durées d'étapes de traitement successives pour un appareil de cuisine électrique de préparation d'aliments, dans lequel l'information comprend également une recette de préparation d'aliments restituable sous une forme de texte(s) et/ou d'image(s), qui est associée aux données de commande de machine (5).

10. Appareil de cuisine à moteur électrique comprenant un dispositif électronique de traitement de données (11) adapté pour lire de l'information (4, 5) et une signature (10) enregistrés conformément à l'une des revendications de procédé précédentes sur un support de données (1) ayant un identifiant numérique individuel (2), pour vérifier la signature (10), et pour traiter des données de commande de processus (5) faisant partie de cette information (4, 5) uniquement lorsque l'identifiant numérique individuel (2) et la signature (10) sont dans une relation prédéterminée entre eux.
